Europäisches Patentamt

European Patent Office

Office européen des brevets

(19)

(11) **EP 0 592 462 B1**

(12) **EUROPÄISCHE PATENTSCHRIFT**

(45) Veröffentlichungstag und Bekanntmachung des Hinweises auf die Patenterteilung:
**30.07.1997 Patentblatt 1997/31**

(21) Anmeldenummer: **92911390.0**

(22) Anmeldetag: **29.05.1992**

(51) Int Cl.⁶: **F16J 15/34**

(86) Internationale Anmeldenummer:
**PCT/EP92/01198**

(87) Internationale Veröffentlichungsnummer:
**WO 92/22760 (23.12.1992 Gazette 1992/32)**

(54) **GLEITRINGDICHTUNG MIT RÜCKFÖRDERSTRUKTUREN**

FLOATING RING SEAL WITH RETURN STRUCTURES

GARNITURE ETANCHE A ANNEAU GLISSANT AVEC DES STRUCTURES DE REFOULEMENT

(84) Benannte Vertragsstaaten:
**AT BE CH DE DK ES FR GB GR IT LI NL SE**

(30) Priorität: **12.06.1991 DE 411932**
**24.03.1992 DE 4209484**

(43) Veröffentlichungstag der Anmeldung:
**20.04.1994 Patentblatt 1994/16**

(73) Patentinhaber: **Flexibox Limited**
**Manchester M17 1SS (GB)**

(72) Erfinder: **Müller, Heinz K.**
**D-71336 Waiblingen (DE)**

(74) Vertreter: **Allman, Peter John et al**
**MARKS & CLERK,**
**Sussex House,**
**83-85 Mosley Street**
**Manchester M2 3LG (GB)**

(56) Entgegenhaltungen:
**DE-A- 2 928 504**      **FR-A- 1 597 609**

**Beschreibung**

Die Erfindung betrifft eine Gleitringdichtung, in deren stirnseitige Dichtflächen Vertiefungen eingearbeitet sind, wobei jede Vertiefung innerhalb des ständig von den Dichtflächen bedeckten Bereichs einen in sich geschlossenen Rand aufweist, wobei das aus dem abzudichtenden Raum zwischen den Dichtflächen in die Vertiefungen eingedrungene Fluid von der rotierenden Gleitfläche mitgeschleppt und sowohl auf höheren Druck gebracht als auch möglichst nahe an den abzudichtenden Raum herangeführt wird, so daß das Fluid aus den Vertiefungen wieder in den abzudichtenden Raum zurückströmt.

Gleitringdichtungen dichten in der Regel ein Fluid (Flüssigkeit oder Gas) dadurch ab, daß sie durch einen sehr engen Dichtspalt zwischen ihren stirnseitigen Dichtflächen dem abzudichtenden Fluid einen hohen Strömungswiderstand entgegensetzen, wodurch der den Spalt durchdringende Leckstrom klein ist. Um während des Betriebs einer Gleitringdichtung den Dichtspalt dauernd sehr eng zu halten, wird der axial bewegliche Dichtring sowohl mittels Federn als auch durch den Druck des abzudichtenden Fluids an den anderen Dichtring angepreßt. Obwohl das Fluid durch Kapillarwirkung und eventuell infolge einer Druckdifferenz in den Dichtspalt eindringt, kann es vorkommen, daß die Dichtflächen sich teilweise und zeitweilig berühren, sich dabei erwärmen und verschleißen. Um daraus resultierende Nachteile, nämlich den Ausfall der Dichtung durch Überhitzung, Rißbildung, Zersetzung des Fluids im Dichtspalt und Bildung von Ablagerungen, übermäßigen Verschleiß usw. zu vermeiden, gibt es nach dem Stand der Technik [1 bis 12 ] eine Vielzahl von Maßnahmen, die darauf abzielen, im Dichtspalt einen tragfähigen Fluiddruck zu erzeugen und aufrecht zu erhalten und auf diese Weise die Dichtflächen zuverlässig zu trennen und dabei einen engen Dichtspalt stabil einzustellen. Diese Maßnahmen lassen sich einteilen in die Begriffe "hydrostatische" und "hydrodynamische" Spaltdruckerzeugung. Bei der hydrostatischen Spaltdruckerzeugung werden Maßnahmen ergriffen, die den Mittelwert des im Dichtspalt vom Druckniveau im abzudichtenden Raum auf das Druckniveau des umgebenden Raums abfallenden Drucks zu verändern. Bei der hydrodynamischen Spaltdruckerzeugung werden Maßnahmen ergriffen, durch die das von der Dichtfläche des rotierenden Dichtrings im Dichtspalt mitgeschleppte Fluid an lokalen Spaltverengungsstellen aufgestaut wird, wodurch sich, wie bei einem hydrodynamischen Gleitlager, der Fluiddruck erhöht. Die Vergrößerung des Spaltdrucks hat jedoch einen dichtungstechnisch schwerwiegenden Nachteil, nämlich eine Vergrößerung des Dichtspalts mit der Folge einer oft beträchtlich vergrößerten Leckage. Im Hinblick auf den Umweltschutz besteht heute jedoch allgemein der Wunsch, bei allen Gleitringdichtungen, die "Problemfluide" abdichten, die Leckage drastisch und zuverlässig zu reduzieren. Um die Leckage von hydrodynamisch geschmierten Gleitringdichtungen einzudämmen, gibt es nach dem Stand der Technik Sonderbauformen, bei denen der vom abzudichtenden Raum her in den Dichtspalt eindringende Fluidstrom mittels besonderer Strukturierung der Dichtflächen so gelenkt wird , daß er zum Teil in den diesen Raum zurückströmt [1; 13, 14]. Nachteile bekannter Ausführungsformen mit dieser Wirkungsweise sind deren fertigungstechnisch komplizierte Struktur, die wegen der Fertigung der Strukturen erforderliche, verhältnismäßig große radiale Breite der Dichtflächen und die Tatsache, daß die Vertiefungen zur Niederdruckseite hin offen sind, wodurch bei manchen Bauarten bei ruhender Welle prinzipiell Leckage entsteht und bei anderen Bauformen die Gefahr besteht, daß bereits geringfügige Verformungen der Dichtflächen beträchtliche Leckage verursachen. Bei manchen Bauformen wird das Fluid in Teilbereichen des Dichtrandes in der falschen Richtung geschleppt und dadurch Leckage erzeugt. Ein anderer Nachteil bekannter Ausführungsformen ist, daß ihre Rückförderwirkung nur in einer Drehrichtung der Welle funktioniert. Schließlich sind auch Gleitringdichtungen [15] bekannt, bei denen Spiralnuten Fluid aus dem niederdruckseitigen Raum in den abzudichtenden Raum pumpen. Diese Eigenschaft widerspricht jedoch der Aufgabe der vorliegenden Erfindung.

Aus einer Reihe von dichtungstechnischen Gründen, nicht zuletzt wegen der Reduzierung des reibungsbedingten Energieverlustes, haben moderne Gleitringdichtungen sehr schmale Gleitflächen, mit einer radialen Breite von zwei Millimetern oder weniger. Die sich im Betrieb einstellende Spalthöhe einer Gleitringdichtung, die axiale Distanz der Dichtflächen, ist im Hinblick auf das Vermeiden von Leckage dann am günstigsten, wenn sie nicht wesentlich größer als die restliche Unebenheit der plangeläppten Dichtflächen ist. Die Spalthöhen liegen somit in der Regel in der Größenordnung eines Mikrometers. Hydrodynamisch wirksame Vertiefungen in den Gleitflächen funktionieren als druckerzeugende oder als rückfördernde Strukturen nur dann optimal, wenn ihre Tiefe von derselben Größenordung ist wie die Höhe des sie umgebenden Dichtspalts.

Damit stellen sich grundsätzlich die Aufgaben, bei Gleitringdichtungen, insbesondere bei solchen mit kleiner Gleitflächenbreite, erstens mittels hydrodynamischer Schmierung Verschleiß und Überhitzung der Dichtflächen zu vermeiden, zweitens das in den Dichtspalt eingedrungene Fluid hydrodynamisch in den abzudichtenden ersten Raum zurückzufördern und drittens die Leckage bei Stillstand der Welle so klein wie möglich zu halten. Dabei ist es wünschenswert daß die die Aufgaben lösenden Dichtteile zuverlässig und wirtschaftlich herstellbar sind und daß sie möglichst in beiden Drehrichtungen der Welle gleichermaßen funktionieren. Für den Fall, daß sich im abzudichtenden Raum und im Umgebungsraum jeweils ein Fluid befindet und die beiden -gleichartigen oder unterschiedlichen - Fluide sicher voneinander getrennt werden müssen, besteht der Wunsch daß das jeweils von einem der beiden Räume in den Dichtspalt eindringende Fluid wieder in denselben Raum zurückgefördert wird, wobei auch diese Funktionsweise möglichst bei beiden Drehrichtungen der Welle wirksam sein sollte.

Diese Aufgaben werden mittels erfindungsgemäß strukturierter Vertiefungen gelöst, die in mindestens eine der radialen Dichtflächen einer Gleitringdichtung eingearbeitet sind. Eine Gleitringdichtung zum Abdichten der Durchtrittsstelle einer umlaufenden Welle durch eine Wand, die einen das abzudichtende Fluid enthaltenden Dichtraum von einem zweiten Raum trennt, wobei in der Regel im Dichtraum ein höherer Druck herrscht als im zweiten Raum, hat einen drehfest an der Wand gehaltenen und zu dieser abgedichteten ersten Dichtring mit einer ebenen, radial zur Wellenachse liegenden, durch einen Außenrand und einen Innenrand begrenzten ersten Stirnfläche sowie einen drehfest an der Welle gehaltenen und gegen diese abgedichteten zweiten Dichtring mit einer ebenen radial zur Wellenachse liegenden, durch einen Außenrand und einen Innenrand begrenzten zweiten Stirnfläche. Die beiden Stirnflächen berühren sich bei stillstehender Welle und bilden bei rotierender Welle einen engen Dichtspalt. Einer der Dichtringe ist in Richtung der Wellenachse beweglich und an den anderen Dichtring anpreßbar. In der Regel erfolgt die Anpressung mittels Federkraft sowie durch die Wirkung des im Dichtraum herrschenden Überdrucks.

Zur Beschreibung der erfindungsgemäßen Merkmale der Gleitringdichtung werden zunächst folgende Begriffe definiert: ein Dichtraum 31, ein zweiter Raum 32, eine Dichtzone 35, zwei Begrenzungskreise, ein Dichtkreis 33, ein Zonenkreis 34, eine Dichtzonenbreite B, ein Mittellkreis 36, eine erste radiale Linie 116, eine zweite radiale Linie 115, ein Rückförderpunkt 46, ein Dichtabschnitt 411, ein Zonenabschnitt 412, ein Rückförderkreis 461, eine erste Bezugsfläche F1 sowie eine zweite Bezugsfläche F2.

Der Raum, in dem sich das abzudichtende Fluid befindet ist der Dichtraum 31. Der Umgebungsraum, der durch den Dichtspalt 13 vom Dichtraum getrennt ist, wird als zweiter Raum 32 bezeichnet. Die ringförmige Dichtzone 35 ist die während der Drehung der Welle ständig von beiden Stirnflächen 113, 213 der Dichtringe 11, 21 überdeckte Zone. Die Dichtzone wird eingegrenzt von zwei Begrenzungskreisen, deren Mittelpunkte auf der Wellenachse 114 liegen. Der Radius eines der beiden Begrenzungskreises ist gleich dem Abstand zwischen der Wellenachse und dem der Wellenachse am nächsten liegenden Punkt eines der Außenränder 111, 211 der Dichtringe. Der Radius des anderen Begrezungskreises ist gleich dem Abstand zwischen der Wellenachse und dem von der Wellenachse am weitesten entfernt liegenden Punkt eines der Innenränder 112, 212. Derjenige Begrenzungskreis, der näher beim Dichtraum liegt, wird als Dichtkreis 33, der andere als Zonenkreis 34 bezeichnet. In der Regel sind die Außenränder und die Innenränder der Stirnflächen der beiden Dichtringe Kreise. In diesem Fall liegt die Dichtzone zwischen dem jeweils größten Innenrand und dem jeweils kleinsten Außenrand eines der beiden Dichtringe. Die Dichtzonenbreite **B** ist der Abstand zwischen den beiden Begrenzungskreisen. Der Mittelkreis 36 ist konzentrisch zu den Begrenzungskreisen und sein Radius ist gleich dem arithmetischen Mittel der Radien der Begrenzungskreise.

Innerhalb der Dichtzone 35 sind in mindestens einen der Dichtringe von dessen Stirnfläche her mehrere Vertiefungen 4 eingearbeitet, wobei jede Vertiefung auf der Stirnfläche einen in sich geschlossenen Rand 41 aufweist. Eine durch die Wellenachse gehende radiale Linie 115 tangiert den Rand der Vertiefung auf der einen Seite, eine radiale Linie 116 tangiert den Rand der Vertiefung auf der anderen Seite. Die radialen Linien schließen somit die Vertiefung ein. Beide radialen Linien 115,116 liegen in der Ebene der Stirnfläche. Jede radiale Linie kann dabei den Rand der Vertiefung an einem einzigen Berührpunkt oder an mehreren Berührpunkten berühren. Auf jeder der beiden radialen Linien 115, 116 gibt es jedoch je einen Berührpunkt 45,46, der dem Dichtkreis am nächsten liegt. Diese beiden Berührpunkte 45,46 teilen den Rand der Vertiefung in zwei Randabschnitte. Der dem Dichtkreis zugewandte Randabschnitt ist der Dichtabschnitt 411, der andere ist der Zonenabschnitt 412. Falls die beiden Berührpunkte 45,46 nicht gleich weit vom Dichtkreis entfernt sind, wird derjenige Berührpunkt, der den absolut kleinsten Abstand vom Dichtkreis hat, als Rückförderpunkt 46 und die radiale Linie, auf der der Rückförderpunkt 46 liegt als erste radiale Linie 116 bezeichnet. Ein Rückförderpunkt 46 hat vom Dichtkreis den Abstand A. Der andere Berührpunkt 45 liegt auf der zweiten radialen Linie 115. Der Kreis mit dem Mittelpunkt auf der Wellenachse, der durch den Rückförderpunkt 46 geht, wird Rückförderkreis 461 genannt. Falls beide Berührpunkte 45,46 gleich weit vom Dichtkreis entfernt sind gibt es zwei Rückförderpunkte. Ist insbesondere die Vertiefung 4 spiegelsymmetrisch zu einer Radialen, und somit beide Berührpunkfe 45,46 gleich weit vom Dichtkreis entfernt, so geht demgemäß der Rückförderkreis durch beide Rückförderpunkfe 45,46.

Die erste Bezugsfläche **F1** wird eingegrenzt vom Rückförderkreis 461, vom Dichtabschnitt 411 und von der durch den anderen Berührpunkt 45 gehenden radialen Linie 115. Der Flächeninhalt der ersten Bezugsfläche **F1** wird negativ gerechnet, wo der Dichtabschnitt 411 zwischen dem Dichtkreis 33 und dem Rückförderkreis 461 liegt. Der Flächeninhalt der ersten Bezugsfläche **F1** wird positiv gerechnet, wo der Rückförderkreis 461 zwischen dem Dichtkreis 33 und dem Dichtabschnitt 411 liegt. Die zweite Bezugsfläche **F2** wird eingegrenzt vom Rückförderkreis 461, vom Zonenabschnitt 412 sowie von der zweiten radialen Linie 115 und ihr Flächeninhalt wird positiv gerechnet. Die Verbindungslinie vom Schnittpunkt 117 der Stirnflächenebene mit der Wellenachse zu einem beliebigen Punkf 40 des Zonenabschnitts 412 wird als Radiusvektor 110 bezeichnet.

Erfindungsgemäß werden alle genannten Aufgaben gemeinsam mittels der in die Stirnflächen eingearbeiteten Vertiefungen 4 dadurch gelöst, daß deren Ränder vollständig innerhalb der Dichtzone liegen, wobei in den Vertiefungen durch die Schleppwirkung der rotierenden Gleitfläche das Fluid möglichst nahe an den Dichtkreis herangeführt und dabei hydrodynamisch auf höheren Druck gebracht wird, so daß das Fluid bei geringem Strömungswiderstand in den Dichtraum zurückströmt, indem erfindungsgemäß das Verhältnis des Abstands **A** zur Dichtzonenbreite **B** im Bereich $0,001 \leq (A/B) \leq 0,2$ liegt, wodurch der Rückförderpunkt vom Dichtkreis einen sehr kleinen Abstand **A** hat und indem zugleich das Verhältnis der ersten Bezugsfläche zur zweiten Bezugsfläche jeder Vertiefung im Bereich $-0,3 \leq (F1/F2) \leq +0,9$ liegt, wodurch das Fluid innerhalb der Vertiefung funktionsgünstig zum Rückförderpunkt geführt wird. Der Bereich von A/B berücksichtigt die Spannbreite der praxisüblichen radialen Dichtzonenbreiten **B**.

Die an sich bekannte Anordnung von hydrodynamisch wirksamen Vertiefungen innerhalb der Dichtzone und ohne Verbindung zum Dichtraum hat den Vorteil, daß bei Stillstand der Welle in den Vertiefungen ein kleinerer Druck herrscht als im Dichtraum. Im Gegensatz zu bekannten rückförderfähigen Vertiefungen, die mit dem zweiten Raum verbunden sind, hat die erfindungsgemäße Anordnung der rückförderfähigen Vertiefungen den wesentlichen Vorteil, daß sich zwischen den Vertiefungen und dem zweiten Raum der sehr enge, bei Wellenstillstand nur durch die geringfügigen Unebenheiten der Stirnflächen gegebene Dichtspalt befindet. Dadurch ist die Gefahr einer Leckage bei stillstehender Welle bei der erfindungsgemäßen Gleitringdichtung kaum größer als bei einer Gleitringdichtung ohne Vertiefungen, die dieselbe Dichtzonenbreite **B** hat. Die Vertiefungen werden vorzugsweise zwischen dem Dichtkreis und dem Mittelkreis angeordnet, um dadurch den Strömungswiderstand zwischen dem Zonenabschnitt einer Vertiefung und dem zweiten Raum möglichst groß zu machen.

Ein von Null verschiedener Abstand **A** muß vorhanden sein, damit im Bereich des Rückförderpunkts 46 durch Schleppwirkung der rotierenden Gleitfläche hydrodynamisch ein hoher Druck entstehen kann, der sowohl die Rückförderung als auch die Gleitflächenschmierung begünstigt. Der Abstand A beträgt höchstens 0,5 mm, vorzugsweise ist er kleiner als 0,1 mm. Bei gut zentrierten und genau bearbeiteten Dichtringen ist beispielsweise ein Abstand **A** von ungefähr 10 Mikrometer ausführbar und ergibt eine hervorragende Rückförderwirkung. Ein guter Kompromiß zwischen Fertigungsaufwand und Rückförderwirkung wird im Bereich **A** = 50 bis 100 Mikrometer erreicht.

Um ein verstärktes Einströmen aus dem Dichtraum direkt in eine erfindungsgemäße, rückförderfähige Vertiefung zu vermeiden, liegt vorzugsweise kein Punkt des Dichtabschnitts 411 näher beim Dichtkreis 33 als der Rückförderpunkt 46, womit **F1** in der Regel ein positives Vorzeichen hat und demgemäß vorzugsweise $0 \leq (F1/F2) \leq 0,9$ ausgeführt wird. Eine besonders günstige Rückförderwirkung entsteht, wenn das Fluid in der Vertiefung im Mittel unter einem flachen Winkel an den Rückförderkreis herangeführt wird. Dazu wird das Verhältnis vorzugsweise im Bereich $0,1 \leq (F1/F2) \leq 0,5$ ausgeführt.

Falls der Dichtkreis größer ist als der Zonenkreis, der Dichtraum also die Gleitringdichtung umgibt, ist bei erfindungsgemäß kleinem Abstand **A** des Rückförderpunkts vom Dichtkreis die Rückförderwirkung besonders günstig, wenn erfindungsgemäß der Dichtabschnitt kürzer als der Zonenabschnitt ist. Eine in beiden Drehrichtungen der Welle gleichermaßen günstige Rückförderwirkung wird erfindungsgemäß dadurch erreicht, daß die Vertiefungen spiegelsymmetrisch zu einer Radialen sind. Eine günstige Rückförderwirkung wird auch dadurch erreicht, daß der Zonenabschnitt so geformt ist, daß der Radiusvektor beim Überstreichen des Zonenabschnitts sich in höchstens einer Richtung dreht. Dies bedeutet, daß am Zonenabschnitt rückspringende Buchten und vorspringende Zungen der Vertiefung ausgeschlossen sind und daß somit im Bereich des Zonenabschnitts - außer an der allein vorspringenden Stelle am Rückförderpunkt - eine lokale übermäßige Druckerhöhung und ein damit verbundener verstärkter Austritt von Fluid aus der Vertiefung in den Dichtspalt nicht stattfindet.

Vorzugsweise besteht eine erfindungsgemäße Vertiefung aus mindestens zwei Gräben mit unterschiedlichen Längen, wobei der jeweils längere Graben vom Dichtkreis einen kleineren Abstand hat als jeder kürzere Graben, daß die Gräben entlang von Teilen ihrer Längskanten aneinander angrenzen, dergestalt, daß die von den Gräben und der ständigen Dichtfläche gebildeten Hohlräume ineinander übergehen. Als Graben wird im wesentlichen eine langgestreckte Vertiefung verstanden, die im wesentlichen einen rechteckigen Querschnitt aufweist. Die Gräben sind im wesentlichen so angeordnet, daß ihre Längserstreckung hauptsächlich tangential verläuft, das heißt, in Richtung der Tangente an einen in der Dichtfläche liegenden Kreis, der seinen Mittelpunkt auf der Wellenachse hat. Mindestens eines der Enden des längsten Grabens, auf dem der Rückförderpunkt liegt, hat vom Dichtkreis erfindungsgemäß einen kleinen Abstand von weniger als 0,5 mm. Durch jede dieser Maßnahmen wird bewirkt, daß das im Graben befindliche und von der Dichtfläche, die sich relativ zu der mit den Vertiefungen versehenen Dichtfläche dreht, mitgeschleppte Fluid - in Schlepprichtung gesehen - am hinteren Ende eines Grabens staut und in den angrenzenden Graben überströmt. Durch die Anordnung der Gräben relativ zum Dichtraum wird bewirkt, daß das Fluid kaskadenartig letztlich in denjenigen Graben gelangt, der dem ersten Raum am nächsten liegt. Das in diesem Graben in dessen Längsrichtung geschleppte Fluid wird zum Ende dieses Grabens hin, wo kein anderer Graben mehr angrenzt, aufgestaut. Dadurch steigt, je nach Schleppgeschwindigkeit, Viskosität und Tiefe des Grabens, der Druck des Fluids zum Ende dieses Grabens hin erheblich an. Dieses Ende hat erfindungsgemäß einen sehr geringen Abstand vom Dichtkreis. Somit ist innerhalb des Dichtspaltes die Distanz und somit auch der Strömungswiderstand zwischen dem Ende dieses Grabens und dem Dichtraum gering, wodurch ein großer Teil des aus diesem Graben abströmenden Fluids in den Dichtraum strömt.

Vorzugsweise sind die aneinander anliegenden Gräben unterschiedlich tief, dergestalt daß der längste Graben die geringste Tiefe und der kürzeste Graben die größte Tiefe aufweist, wobei die von den Gräben und der ständigen Dichtfläche gebildeten Hohlräume jeweils in den Bereichen, in denen Gräben aneinander angrenzen, mit einer Stufe ineinander übergehen. Vorzugsweise liegt in einem Bereich, in dem zwei Gräben aneinander angrenzen, der jeweils die geringere Tiefe aufweisende Graben näher beim Dichtkreis, mit anderen Worten, vom Dichtraum her gesehen ist ein jeweils weiter entfernter Graben tiefer als ein weniger weit entfernter. Ausnahmen von dieser vorzugsweise einzuhaltenden Regel sind dann angebracht, wenn es günstig erscheint, zum Auffangen und Einlagern von in den Dichtspalt gelangten Fremdpartikeln, oder von im Spalt entstandenen Abrieb-, Reaktions-, Ausfällungs- oder Verkokungsprodukten zwischendurch tiefere Gräben vorzusehen.

Der Graben mit der geringsten Tiefe ist vorzugsweise zwischen 0,2 Mikrometer und 5 Mikrometer tief, und die Höhe einer Stufe - gleich dem Unterschied der Tiefen von zwei aneinander angrenzenden Gräben - beträgt vorzugsweise zwischen 0,2 Mikrometer und 5 Mikrometer. Die Breite und die Tiefe einzelner Gräben kann in Längsrichtung des Grabens veränderlich sein. Vorzugsweise beträgt die Breite eines Grabens zwischen 0,05 und 0,2 Millimeter. Vorzugsweise nimmt die Tiefe mindestens eines der Gräben, in seiner Längsrichtung gesehen, zu mindestens einem seiner Enden hin ab. Vorzugsweise nimmt die Tiefe desjenigen Grabens, dessen Ende dem Dichtkreis am nächsten liegt, zu diesem Ende hin ab. Dadurch wird der Druck am Ende dieses Grabens besonders hoch und die Rückförderung besonders intensiv und günstig.

Vorzugsweise ist mindestens eine Längskante mindestens eines Grabens gekrümmt, wobei der Krümmungsmittelpunkt auf der Seite des Dichtraums liegt. Diese Ausführung ist besonders vorteilhaft, wenn der kleinere der beiden Begrenzungskreise der Dichtkreis ist. Durch die Krümmung zumindest des dem Spaltrand am nächsten liegenden Grabens wird in diesem Fall erreicht, daß mindestens ein Ende dieses Grabens einen sehr kleinen Abstand A vom Dichtkreis hat. Bei einer anderen günstigen Ausführung der erfindungsgemäßen Gleitringdichtung sind die Längskanten der Gräben gerade Strecken, die mit einer durch einen beliebigen Punkt einer Längskante gezogenen Radialen einen kleinsten Winkel $\alpha$ vorzugsweise zwischen 70° und 90° bilden. Bei einer besonders vorteilhaften, für beide Drehrichtungen der Welle geeigneten Ausführung sind die Gräben spiegelsymmetrisch zu einer Radialen angeordnet.

Bei einer weiteren Art der erfindungsgemäßen Gleitringdichtung sind die Randabschnitte der Vertiefungen Polygonzüge aus geraden und/oder gekrümmten Teilstücken. Bei einer von außen druckbelasteten Gleitringdichtung, bei der also der Dichtkreis größer ist als der Zonenkreis, ist vorzugsweise der Dichtabschnitt eine einzige gerade Strecke und der Zonenabschnitt eine Kurve oder ein Polygonzug aus mindestens zwei Geraden. Bei besonders fertigungsgünstigen Ausführungsform, die beispielsweise durch stirnseitiges Einschneiden eines mit seiner Zylinderachse zur Stirnfläche schräg gestellten kreiszylindrischen Werkzeugs zustandekommt, hat der Rand der Vertiefung die Form eines Ellipsenabschnitts, dessen Sehne der Dichtabschnitt ist. Bei einer weiteren vorzuziehenden Ausführungsform hat der Rand der Vertiefung die Form eines Dreiecks, dessen längste Seite der Dichtabschnitt ist. Vorzugsweise ist die Tiefe der Vertiefungen veränderlich, dergestalt daß sie im Bereich ihres Dichtabschnitts die geringste Tiefe aufweisen. Vorzugsweise wird der Boden der Vertiefungen von einer ebenen, zur Stirnfläche geneigten Fläche gebildet. Die größte Tiefe t der Vertiefung beträgt vorzugsweise zwischen 1 und 10 Mikrometer. Diese vorzuziehenden Randformen - Ellipsenabschnitt oder Dreieck - sind wiederum vorzugsweise spiegelsymmetrisch zu einer Radialen, wodurch sie in beiden Drehrichtungen der Welle dieselbe Rückförderwirkung aufweisen. Falls bei Verwendung von Vertiefungen mit spiegelsymmetrischem Rand bei Linkslauf und Rechtslauf der Welle eine etwas unterschiedliche Förderwirkung erwünscht ist, bildet die Sehne oder die längste Dreieckseite mit einer durch ihre Mitte gezogenen Radialen einen von 90° verschiedenen Winkel, vorzugsweise zwischen 70° und 89°.

Um die Dichtflächen hydrodynamisch zu schmieren und den Dichtspalt zu stabilisieren werden vorzugsweise außer den rückförderfähigen Vertiefungen in an sich bekannter Weise in die Stirnfläche mindestens eines Dichtrings zusätzliche Vertiefungen eingearbeitet, die sich radial mindestens bis zum Dichtkreis erstrecken, so daß während der relativen Drehung der beiden Dichtringe die von den zusätzlichen Vertiefungen zusammen mit der Stirnfläche des anderen Dichtrings gebildeten Hohlräume mit dem Dichtraum zumindest zeitweilig in Verbindung stehen. Erfindungsgemäß ist eine zusätzliche Vertiefung vorzugsweise zwischen 1 Mikrometer und 20 Mikrometer tief. Eine zusätzliche Vertiefung ist in Verbindung mit der Definition der Dichtzone ein Bestandteil der Stirnfläche, in der die zusätzliche Vertiefung eingearbeitet ist, das heißt, die Lage der Begrenzungskreise wird durch die Existenz zusätzlicher Vertiefungen nicht verändert. Um eine vorteilhafte symmetrische Verteilung des hydrodynamischen Fluiddrucks über der Dichtfläche zu erhalten, sind vorzugsweise mindestens zwei zusätzliche Vertiefungen in gleichem Abstand von der Wellenachse und jeweils in gleichem Winkelabstand am Umfang angeordnet. Vorzugsweise ist zwischen zwei benachbarten erfindungsgemäßen rückförderfähigen Vertiefungen mindestens eine zusätzliche Vertiefung angeordnet.

Schließlich sind zum Zwecke der Trennung zweier unterschiedlicher Fluide, die die Dichtringe jeweils außen bzw. innen umgeben, die Vertiefungen 4 erfindungsgemäß so angeordnet, daß jedes Fluid für sich in denjenigen Raum zurückgefördert wird, aus dem es in den Spalt eingeströmt ist. In diesem Fall ist auch der zweite Raum 32 definitionsgemäß ein Dichtraum und demgemäß sind beide Begrenzungskreise definitionsgemäß Dichtkreise. Zugleich ist in geringem Abstand vom zweiten Dichtkreis 34 ein zweiter Rückförderkreis 462 definiert, auf dem die Rückförderpunkte 46 eines Teils der Vertiefungen liegen.

Damit die erfindungsgemäß nur Bruchteile eines Mikrometers bis einige Mikrometer tiefen Vertiefungen und zusätzlichen Vertiefungen nicht infolge von Verschleiß der Dichtfläche verschwinden können, werden sie erfindungsgemäß in einen Dichtring aus sehr hartem, verschleißfestem Werkstoff eingearbeitet. Vorzugsweise bestehen diejenigen Gleitringe der erfindungsgemäßen Gleitringdichtung, in die Vertiefungen eingearbeitet sind, aus keramischem Werkstoff. Wegen der hohen Verschleißfestigkeit, der chemischen Beständigkeit und der guten Wärmeleitfähigkeit von Siliciumkarbid wird vorzugsweise dieser Werkstoff für Gleitringe mit den erfindungsgemäßen Rückförderstrukturen verwendet.

Vertiefungen mit zum Zweck einer optimale Rückförderwirkung erfindungsgemäß sehr geringen Tiefe von Bruchteilen eines Mikrometers bis zu wenigen Mikrometern werden in die Dichtringe vorzugsweise mittels Laserstrahl oder Elektronenstrahl eingearbeitet. Bei einem bekannten Bearbeitungsverfahren [16] werden vergleichsweise tiefe Strukturen mittels Laserstrahlen in ungesinterte "Grünfolien" keramischer Werkstoffe eingearbeitet. Im Falle der erfindungsgemäßen Gleitringdichtung werden hingegen die erfindungsgemäßen Vertiefungen in den harten Werkstoff des Dichtrings eingearbeitet. Speziell werden in die nach dem Stand der Technik für Gleitringdichtungen vorzugsweise verwendeten keramischen Werkstoffe die erfindungsgemäßen Vertiefungen erfindungsgemäß in die gesinterten, also harten und durch Planläppen der Dichtflächen bereits fertig bearbeiteten Dichtringe eingearbeitet. Wegen des besonderen Vorteils eines direkten, hochgenauen Materialabtrags durch Aufbrechen von chemischen Verbindungen mit der hohen Photonenenergie sehr kurzwelliger Excimer-Laserstrahlen, werden die erfindungsgemäß sehr kleinen Vertiefungen in extrem harte Werkstoffe der Dichtringe erfindungsgemäß vorzugsweise mittels Excimer-Laser eingearbeitet. Vorzugsweise werden die Vertiefungen nach der Endbearbeitung der Dichtringe in die bereits plangeläppte Dichtfläche mittels Excimer-Laser eingearbeitet. Vorzugsweise wird mindestens ein Teil der Vertiefungen durch mehrmalige zeitlich aufeinanderfolgende Laser-Bestrahlung der Projektionsfläche oder von Teilen der Projektionsfläche der Vertiefungen eingearbeitet.

Vorzugsweise bei der Herstellung von langgestreckten, grabenförmigen Vertiefungen werden in Längsrichtung des Grabens aufeinanderfolgende Bereiche überlappend bestrahlt, wodurch Teilbereiche öfter bestrahlt werden und infolgedessen tiefer sind als daran anschließende Bereiche. Dies geschieht erfindungsgemäß zu dem Zweck, daß bei der Bearbeitung am Übergang von einem Graben zum anderen keinesfalls ein Steg stehen bleibt. Ein solcher Steg würde die Strömung des Fluids in der Vertiefung blockieren und somit die Rückförderwirkung der Vertiefungen erheblich beeinträchtigen. Aus demselben Grund werden an ihren Längsseiten aneinander angrenzende Gräben vorzugsweise überlappend bestrahlt, wodurch am Übergang vom einen zum anderen Graben ein tieferer Einschnitt entsteht.

Im folgenden wird die Erfindung anhand einer Reihe von in Zeichnungen dargestellten, beispielsweisen Ausführungsformen erläutert. In den Zeichnungen zeigen

Fig. 1 einen Längsschnitt durch eine Gleitringdichtung,
Fig. 1a eine Teilansicht der Stirnfläche mit der prinzipiellen Darstellung und den Bezeichnungen des Randes der Vertiefung der erfindungsgemäßen Gleitringdichtung,
Fig. 1b eine Teilansicht der Stirnfläche mit der prinzipiellen Darstellung des Rückförderpunkts und des Rückförderkreises der erfindungsgemäßen Gleitringdichtung,
Fig. 1c zwei Teilansichten der Stirnfläche mit der prinzipiellen Darstellung der ersten Bezugsfläche der erfindungsgemäßen Gleitringdichtung,
Fig. 1d eine Teilansicht der Stirnfläche mit der prinzipiellen Darstellung der zweiten Bezugsfläche der erfindungsgemäßen Gleitringdichtung,
Fig. 2 die Ansicht von Sektoren von insgesamt 8 Ausführungsformen des Randes der Vertiefungen der erfindungsgemäßen Gleitringdichtung,
Fig. 3 in zwei Teilansichten die Stirnflächen mit zwei verschiedenen Ausführungsformen der Vertiefungen der erfindungsgemäßen Gleitringdichtung mit zusätzlichen Vertiefungen,
Fig. 4 die Erläuterung der Strömung durch grabenförmige Vertiefungen und zusätzliche Vertiefungen der erfindungsgemäßen Gleitringdichtung,
Fig. 5 in perspektivischer Darstellung einen Schnitt durch einen Dichtring der erfindungsgemäßen Gleitringdichtung mit grabenförmigen Vertiefungen.
Fig. 6 in perspektivischer Darstellung einen Schnitt durch einen Dichtring der erfindungsgemäßen Gleitringdichtung mit schräg eingeschnittenen Vertiefungen mit elliptischem Rand,
Fig. 7 in zwei Teilansichten die Stirnflächen von zwei verschiedenen Ausführungsformen mit innenliegenden und außenliegenden Vertiefungen der erfindungsgemäßen Gleitringdichtung zur Trennung von zwei Fluiden,
Fig. 8 eine Teilansichte der Stirnfläche einer erfindungsgemäßen Gleitringdichtung mit innenliegenden und außenliegenden Vertiefungen zur Trennung von zwei Fluiden,
Fig. 9 die Erläuterung der Strömung durch die Vertiefungen und zusätzlichen Vertiefungen einer erfindungsgemäßen Gleitringdichtung mit innenliegenden und außenliegenden Vertiefungen zur Trennung von zwei Fluiden.

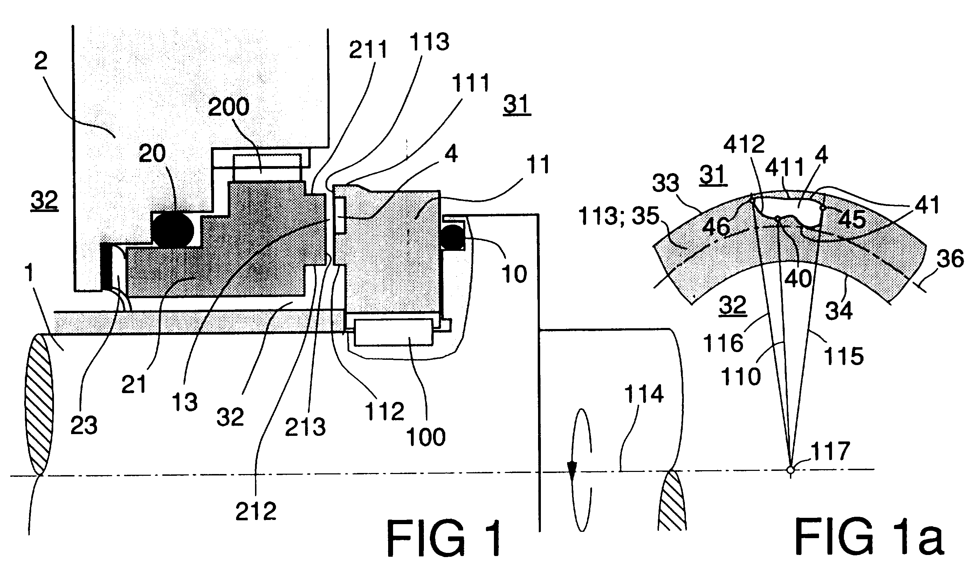

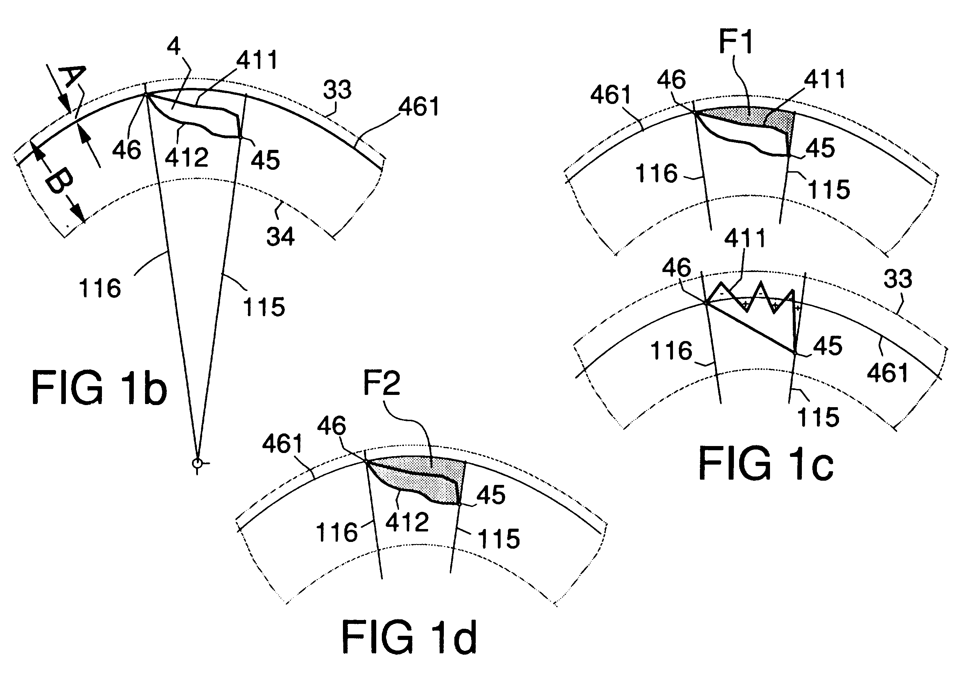

Die in der Fig. 1 beispielhaft dargestellte Anordnung enthält die Grundelemente und Merkmale einer Gleitringdichtung, die den Durchtritt einer umlaufenden Welle 1 von einem Dichtraum 31 durch eine Wand 2 in einen zweiten Raum 32 abdichtet, nämlich einen an der Wand mit einem Verdrehsicherungselement 200 gehaltenen, mit einem statischen Dichtelement 20 gegen diese abgedichteten, axial beweglichen ersten Dichtring 21 mit einer Stirnfläche 213, einen an der Welle mit einem Verdrehsicherungselement 100 gehaltenen, mit einem statischen Dichtelement 10 gegen diese abgedichteten zweiten Dichtring 11 mit einer Stirnfläche 113, eine Vertiefung 4, eine axial auf den ersten Dichtring einwirkende Feder 23, sowie einem im Betrieb zwischen den Stirnflächen sich einstellenden Dichtspalt 13.

Fig. 1a zeigt eine Teilansicht der Stirnfläche des erfindungsgemäßen Dichtrings 11 aus Fig. 1 mit einer prinzipiellen Darstellung einer in den Dichtring eingearbeiteten Vertiefung 4. Der in Fig. 1a gerastert wiedergegebene Teil der Stirnfläche 113 ist die Dichtzone 35. Sie ist die während der Drehung der Welle ständig von beiden Stirnflächen überdeckte Zone und liegt zwischen dem Dichtkreis 33 und dem Zonenkreis 34. Falls die Außenränder und Innenränder der Dichtringe kreisförmig und konzentrisch zur Wellenachse hergestellt sind, ist der Dichtkreis 33 identisch mit dem kleineren der beiden Außenränder 111,211 und der Zonenkreis identisch mit dem größeren der beiden Innenränder 112, 212. In der Mitte der Dichtzone liegt der Mittelkreis 36. Der Rand 41 der Vertiefung wird links von der ersten radialen Linie 116 im Berührpunkt 46 berührt. Rechts berührt die zweite radiale Linie 115 den Rand entlang eines geradlinigen Teils des Rands. Derjenige Punkt auf dem geradlinig berührten Teil des Rands, der unter allen Punkten dieses geradlinigen Teils vom Dichtkreis 33 den kleinsten Abstand hat ist definitionsgemäß der andere Berührpunkt 45. Unter beiden Berührpunkten hat der Berührpunkt 46 den kleinsten Abstand vom Dichtkreis 33 und ist somit definitionsgemäß der Rückförderpunkt 46. Zwischen den Berührpunkten 45 und 46 erstreckt sich auf der Seite des Dichtkreises 33 der Dichtabschnitt 411 und auf der Seite des Zonenkreises 34 der Zonenabschnitt 412. Der Radiusvektor 110 ist die Verbindungslinie vom Schnittpunkt 117 der Dichtflächenebene mit der Wellenachse und einem beliebigen Punkt 40 auf dem Zonenabschnitt 412.

Bei der in den Figuren 1 und 1a gezeigten Dichtungsanordnung liegt beispielhaft der Dichtraum 31 außerhalb der Außenränder der Dichtringe 11, 21 und der zweite Raum befindet sich innerhalb deren Innenränder. Selbstverständlich kann der Dichtraum auch innen und demgemäß der zweite Raum außen liegen. Im letzteren Fall sind die Bezeichnungen hinsichtlich des Dichtkreises und des Zonenkreises in Figur 1a zu vertauschen. Der Dichtkreis liegt in diesem Fall auf der Innenseite der Dichtzone und die Vertiefung ist erfindungsgemäß wiederum so angeordnet, daß der Rückförderpunkt 46 einen sehr kleinen Abstand A vom Dichtkreis hat.

Fig. 1b zeigt eine andere Form einer Vertiefung 4. Durch den Rückförderpunkt 46, geht die erste radiale Linie 116 sowie der Rückförderkreis 461, der vom Dichtkreis 33 den Abstand A hat. Der Abstand des Dichtkreises 33 vom Zonenkreis 34 wird als Dichtzonenbreite B bezeichnet. Durch den zweiten Berührpunkt 45, geht die zweite radiale Linie 115. Der Rand der Vertiefung hat den Dichtabschnitt 411 und den Zonenabschnitt 412.

Fig. 1c zeigt oben die erste Bezugsfläche F1, die eingeschlossen wird vom Rückförderkreis 461, vom Dichtabschnitt 411 und von der zweiten radialen Linie 115. Die Fig. 1c zeigt unten eine andere Form des Randes einer Vertiefung, bei dem der Dichtabschnitt den Rückförderkreis mehrmals schneidet. Dadurch ergeben sich definitionsgemäß positive und negative Anteile der Bezugsfläche F1.

Fig. 1d zeigt die zweite Bezugsfläche F2, die eingeschlossen wird vom Rückförderkreis 461, vom Zonenabschnitt 412 und von der zweiten radiale Linie 115. Die Figuren 1c und 1d verdeutlichen das Flächenverhältnis F1/F2 und lassen - in Verbindung mit dem erfindungsgemäßen Merkmal, daß die in radialer Richtung gemessene Breite einer Vertiefung in der Nähe des Rückförderpunkts, kleiner ist als im mittleren Bereich der Vertiefung - den Zusammenhang zwischen der Gestalt der Vertiefung und der Rückförderwirkung erkennen.

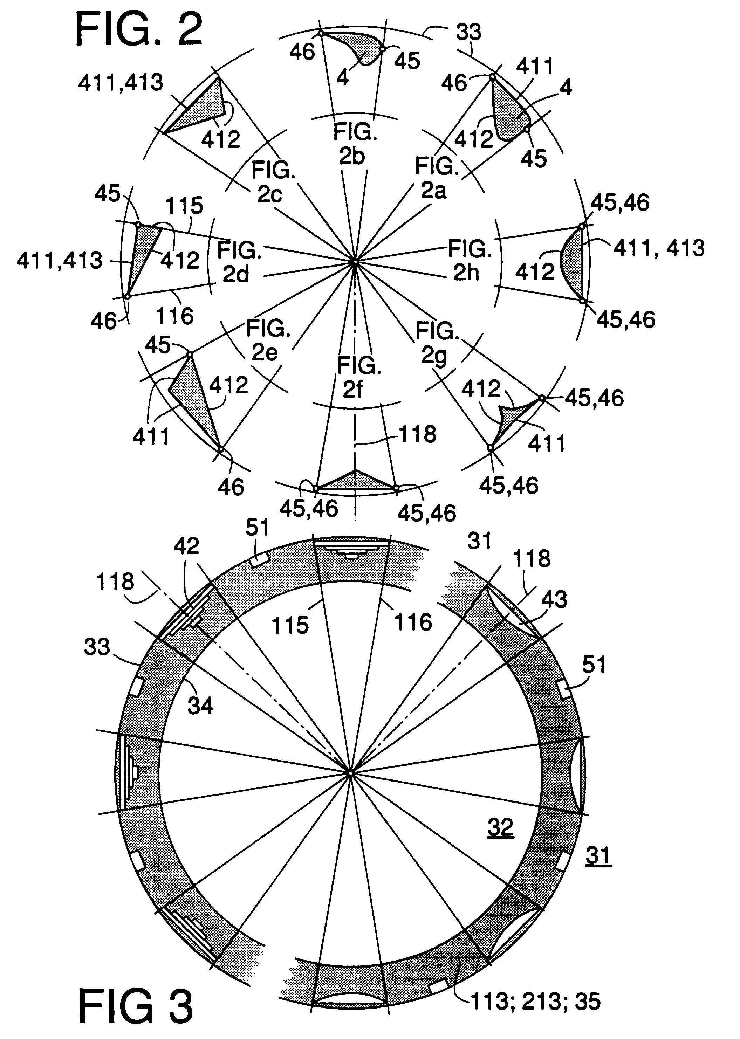

Fig. 2 zeigt in den Teilfiguren 2a bis 2h die Ansichten von insgesamt 8 Ausführungsformen der Vertiefung 4 der erfindungsgemäßen Gleitringdichtung. Für alle Beispiele der Fig. 2 ist angenommen, daß der Dichtraum 31 außen liegt. Dies ist bei Gleitringdichtungen der Regelfall . Die erfindungsgemäßen Merkmale sind jedoch ohne weiteres auch bei einer Gleitringdichtung anwendbar, bei der der Dichtraum 31 innen und der zweite Raum 32 außen liegt. Fig. 2a zeigt eine allgemeine Grundform mit den Randabschnitten 411 und 412, die durch die Berührpunkte 45 und 46 der beidseits tangierenden radialen Linien bestimmt sind. Bild 2b zeigt eine abgewandelte Grundform. Die Randkonturen nach den Bildern 2c, 2d, 2e und 2f sind Dreiecke. Bei Fig. 2d erstreckt sich der Zonenabschnitt definitionsgemäß um die innere Ecke bis zum Punkt 45, da die kürzeste Dreiecksseite radial gerichtet ist. Fig. 2g zeigt eine sehr spitz zulaufende Randkontur mit dem Zonenabschnitt 412. Fig. 2h zeigt eine Vertiefung mit einem Rand, der die Form eines Kreisabschnitts oder eines Ellipsenabschnitts hat. Die Ausführungsbeispiele nach den Figuren 2f, 2g und 2h sind spiegelsymmetrisch zu einer Radialen 118 und zeigen somit in beiden Drehrichtungen der Welle gleiche Eigenschaften. Bei allen in Fig. 2 gezeigten Ausführungsformen der Randkontur der Vertiefungen liegt erfindungsgemäß mindestens einer der Berührpunkte sehr nahe beim Dichtkreis 33.

Fig. 3 zeigt in zwei Teilansichten die ständigen Dichtzonen 35 der Stirnflächen 113 bzw. 213 von zwei verschiedenen Ausführungsformen, nämlich rechts mit Vertiefungen 43, deren Rand ein zur Radialen 118 spiegelsymmetrischer Kreis- oder Ellipsenabschnitt ist, und links mit spiegelsymmetrischen Vertiefungen 42, die aus mehreren aneinandergrenzenden schmalen Gräben bestehen. Zwischen den Vertiefungen sind zusätzliche Vertiefungen 51 angeordnet, die mit dem ersten, hier außenliegenden, Dichtraum 31 in Verbindung stehen.

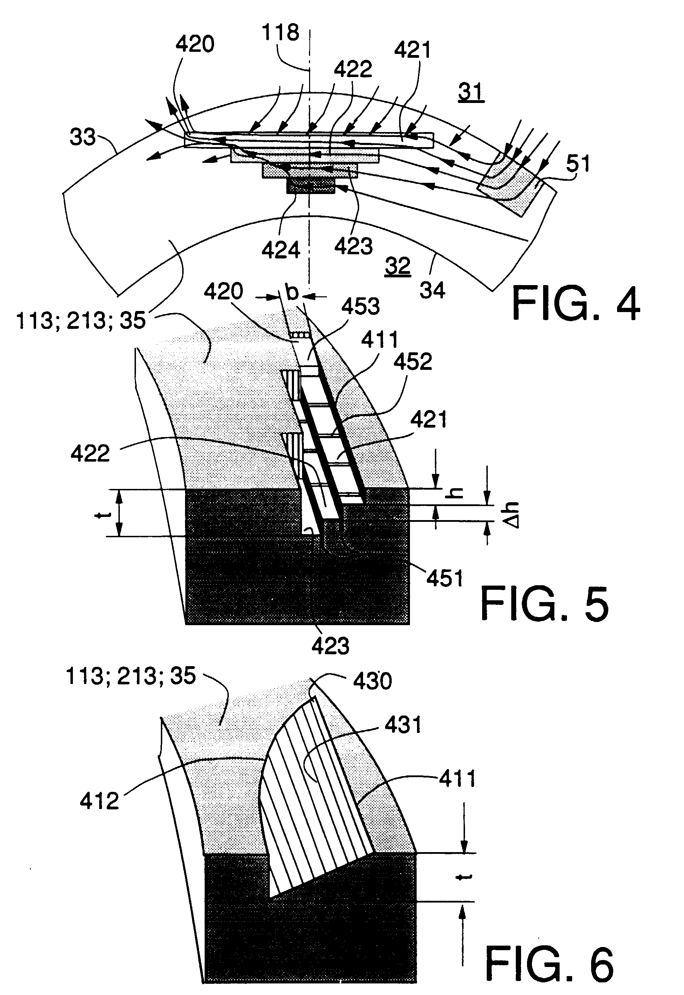

Fig. 4 erläutert die Strömung durch die Vertiefungen und zusätzlichen Vertiefungen der erfindungsgemäßen Gleitringdichtung am Beispiel der Strömung durch grabenförmige, aneinander angrenzende, spiegelsymmetrische Vertiefungen 422. Fluid aus dem Dichtraum 31 gelangt in die Dichtrand hin offene zusätzliche Vertiefung 51 und wird von der relativ darüber hinweggleitenden Stirnfläche des anderen Dichtrings aus der zusätzlichen Vertiefung in den Dichtspalt geschleppt. Dort wird es weiter bis über die Ränder der Gräben der Vertiefung in die Gräben 421,422,423 und 424 geschleppt. Zugleich strömt Fluid infolge Kapillarwirkung und eventuell infolge eines Überdrucks im Dichtraum 31 radial über den Dichtkreis 33 nach innen in den Dichtspalt und in die Gräben. Durch axiale Fluktuationen der Spaltwände wird zudem Fluid in die Vertiefung gequetscht, abgestreift und in den Gräben wiederum durch Schleppwirkung an den Enden der Gräben aufgestaut. Am Ende eines jeweils kürzeren Grabens weicht das aufgestaute Fluid seitlich in den angrenzenden längeren Graben aus und wird dort weiter geschleppt und gelangt so kaskadenartig schließlich in den längsten Graben 421. Am Ende 420 dieses erfindungsgemäß sehr flachen Grabens entsteht ein verhältnismäßig hoher hydrodynamischer Druck, der ohne weiteres sehr viel größer sein kann als der Druck im Dichtraum 31. Da das Ende 420 des längsten Grabens 421 erfindungsgemäß sehr nahe am Dichtkreis 33 liegt, ist der Strömungswiderstand im Spalt zwischen dem Ende 420 des Grabens 421 und dem Dichtraum 31 verhältnismäßig klein und ein großer Teil des von der Vertiefung "aufgesammelten" und umgelenkten Fluidstroms gelangt über den Dichtkreis 33 zurück in den ersten Raum.

Fig. 5 zeigt in perspektivischer Darstellung einen Schnitt durch einen Dichtring der erfindungsgemäßen Gleitringdichtung mit grabenförmigen Vertiefungen 421, 422,423, die erfindungsgemäß vorzugsweise mittels Laserstrahl hergestellt sind. Die Tiefe h des flachsten und zugleich längsten Grabens 421 nimmt zu dessen Ende 420 hin im Bereich 453 einen noch kleineren Wert an, wodurch der Druck am Ende des Grabens extrem hoch wird. Die Kante des Grabens 421 ist Teil des Dichtrandes 411. Der Graben 421 hat die Breite b. Die Stufe $\Delta h$ zwischen den Gräben ist annähernd so groß wie die Tiefe des flachsten Grabens. Der tiefste Graben 423 hat die Tiefe t. Bei der Herstellung der langgestreckten Vertiefungen werden in Längsrichtung der Gräben aufeinanderfolgende Bereiche überlappend bestrahlt, wodurch Teilbereiche 452 tiefer sind als daran anschließende Bereiche der Gräben. Ebenso werden an ihren Längsseiten aneinander angrenzende Gräben vorzugsweise überlappend bestrahlt, wodurch am Übergang vom einen zum anderen Graben tiefere Einschnitte 451 entstehen.

Fig. 6 zeigt in perspektivischer Darstellung einen Schnitt durch einen Dichtring der erfindungsgemäßen Gleitringdichtung mit schräg eingeschnittenen Vertiefungen mit einem beispielsweise elliptischen Zonenabschnitt 412. Die Vertiefung ist nach innen begrenzt von der beispielsweise ebenen Fläche 431 und hat an der tiefsten Stelle die Tiefe t. Hier nimmt der Querschnitt der Vertiefung in Schlepprichtung erfindungsgemäß zum Ende 430 hin auf doppelte Weise ab, nämlich einerseits die radiale Breite und andererseits die Tiefe. Dadurch entsteht mit vorteilhafter Wirkung am Rückförderpunkt ein besonders hoher, für die Spaltbildung und für die Rückförderung des Fluids wirksamer hydrodynamischer Druckaufbau.

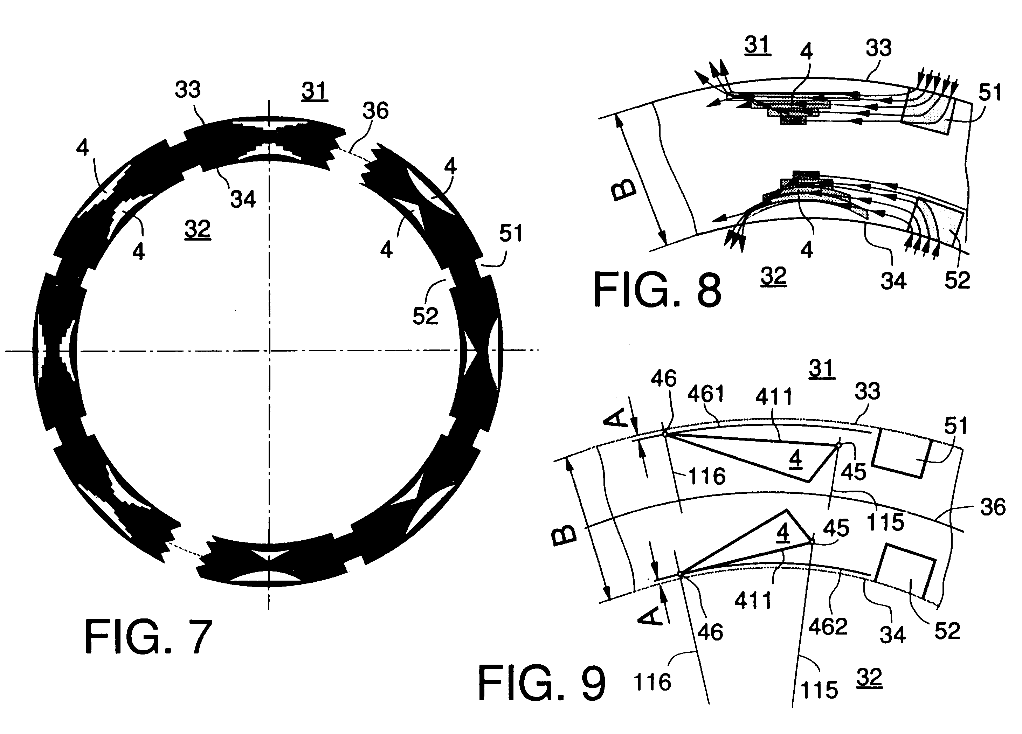

Fig. 7 zeigt in zwei Teilansichten die ständigen Dichtzonen von zwei verschiedenen Ausführungsformen der erfindungsgemäßen Gleitringdichtung, die zur trennenden Abdichtung von zwei Fluiden geeignet ist, die sich jeweils im Raum 31 und im Raum 32 befinden. Sowohl innerhalb als auch außerhalb des Mittelkreises 36 sind jeweils zu einer Radialen spiegelsymmetrische Vertiefungen 4 in die Stirnflächen eingearbeitet. Zwischen den Vertiefungen sind außen zusätzliche Vertiefungen 51 und innen weitere zusätzliche Vertiefungen 52 eingearbeitet, die jeweils mit den angrenzenden Räumen 31 bzw. 32 in Verbindung stehen. Die Vertiefungen 4 fördern das über den jeweiligen Begrenzungskreis -der demgemäß Dichtkreis ist- aus dem jeweils angrenzenden Raum in den Spalt eintretende Fluid in denselben Raum zurück.

Fig. 8 veranschaulicht die Strömung durch die Vertiefungen und zusätzlichen Vertiefungen zwischen den Stirnflächen der in Fig. 7 in der linken Teilansicht gezeigten erfindungsgemäßen Gleitringdichtung. Der Strömungsverlauf ist analog zu dem in Fig. 4 erläuterten Verlauf. Auf der Innenseite sind grabenförmige Vertiefungen 4 mit jeweils zum Begrenzungskreis hin gekrümmten Gräben in die Stirnflächen eingearbeitet. Dadurch ist es erfindungsgemäß möglich, die Enden des dem inneren Dichtkreis 34 am nächsten liegenden Grabens sehr nahe an den Dichtkreis 34 heranzuführen. Auf der Außenseite entspricht die Form und Funktion der Gräben der Vertiefung 4 der mit Fig. 4 erläuterten Ausführung.

Fig. 9 zeigt schließlich eine Teilansicht der ständigen Dichtzone einer erfindungsgemäßen Gleitringdichtung zum trennenden Abdichten von zwei Fluiden, die sich jeweils im Raum 31 und im Raum 32 befinden. Sowohl innerhalb als auch außerhalb des Mittelkreises 36 sind Vertiefungen 4 in die Stirnfläche eingearbeitet. Der Rückförderpunkt 46 der außenliegenden Vertiefungen liegt auf einem äußeren Rückförderkreis 461, der den geringen Abstand A vom äußeren Dichtkreis 33 hat. Der Rückförderpunkt 46 der innenliegenden Vertiefungen liegt auf einem inneren Rückförderkreis 462, der den geringen Abstand A vom inneren Dichtkreis 34 hat. Der Abstand der beiden Dichtkreise ist hier die Dichtzonenbreite B. Zwischen den Vertiefungen sind außen zusätzliche Vertiefungen 51 und innen weitere zusätzliche Vertiefungen 52 eingearbeitet, die jeweils mit den angrenzenden Räumen 31 bzw. 32 in Verbindung stehen. Da in diesem Ausführungsbeispiel nur einer der Berührpunkte der radialen Linien 115, 116, nämlich jeweils der Rückförderpunkt 46, auf dem jeweiligen Rückförderkreis liegt, hat diese Gleitringdichtung nur in einer Drehrichtung der Welle eine Rückförderwirkung. In der anderen Drehrichtung der Welle würde hier das Fluid in den Vertiefungen jeweils radial zum Mittelkreis hin bis zum Berührpunkt 45 gelenkt und verhältnismäßig weit entfernt vom jeweiligen Dichtkreis aus der Vertiefung in den Dichtspalt strömen. Dadurch würden zwar die Gleitflächen hydrodynamisch geschmiert, die Dichtwirkung wäre jedoch schlecht.

| Zitierte Literatur zum Stand der Technik: | |
| --- | --- |
| [1] Müller, H.K.: Abdichtung bewegter Maschinenteile, Waiblingen, 1990 | |
| [2] DE OS | 1 475 621 |
| [3] FR | 1.597.609 |
| [4] DE OS | 1 964 150 |
| [5] US | 3,640,541 |
| [6] DE OS | 2 108 945 |
| [7] Müller, H.K.: Face Seals, Hydrostatic and Hydrodynamic, ASLE Education Course Fluid Film Sealing, Houston, 1972 | |
| [8] Laurenson, I.T. el al.: A Slot Fed Multirecess Hydrostatic Seal, 6th.I.C.F.S. organised by B.H.R.A., München, 1973 | |
| [9] DE PS | 29 28 504 |
| [10] DE PS | 36 19 489 |
| [11] DE OS | 37 22 303 |
| [12] EP | 0 298 324 |
| [13] DE OS | 38 39 106 |
| [14] EP | 0 369 295 |
| [15] EP | 0 037 210 |
| [16] DE OS | 38 35 794 |

## Patentansprüche

1. Gleitringdichtung zum Abdichten der Durchtrittsstelle einer umlaufenden Welle (1) durch eine Wand (2), die einen ein Fluid enthaltenden Dichtraum (31) von einem zweiten Raum (32) trennt, wobei in der Regel im Dichtraum ein höherer Druck herrscht als im zweiten Raum, und die Gleitringdichtung einen drehfest an der Wand gehaltenen und zu dieser abgedichteten ersten Dichtring (21) mit einer ebenen, radial zur Wellenachse (114) liegenden, durch einen Außenrand (211) und einen Innenrand (212) begrenzten ersten Stirnfläche (213) aufweist, wobei die Gleitringdichtung weiter einen drehfest an der Welle gehaltenen und gegen diese abgedichteten zweiten Dichtring (11) mit einer ebenen, radial zur Wellenachse liegenden, durch einen Außenrand (111) und einen Innenrand (112) begrenzten zweiten Stirnfläche (113) aufweist, wobei einer der Dichtringe in Richtung der Wellenachse beweglich und an den anderen Dichtring anpreßbar ist und die beiden Stirnflächen sich bei stillstehender Welle berühren und bei rotierender Welle einen engen Dichtspalt (13) bilden, wobei derjenige Bereich des Dichtspalts, der bei der Rotation der Welle zu jeder Zeit von beiden Stirnflächen überdeckt ist, als Dichtzone (35) bezeichnet wird, wobei die Dichtzone von zwei Begrenzungskreisen eingeschlossen ist, deren Mittelpunkt jeweils auf der Wellenachse liegt und der Radius des einen Begrenzungskreises gleich dem Abstand zwischen der Wellenachse und dem dieser am nächsten liegenden Punkt eines der Außenränder (111, 211) ist und der Radius des anderen Begrenzungskreises gleich dem Abstand zwischen der Wellenachse und dem von dieser am weitesten entfernt liegenden Punkt eines der Innenränder (112, 212) ist, und derjenige Begrenzungskreis, der näher beim Dichtraum (31) liegt als Dichtkreis (33) bezeichnet wird, und derjenige Begrenzungskreis, der näher beim zweiten Raum (32) liegt als Zonenkreis (34) bezeichnet wird, wobei der Abstand zwischen den Begrenzungskreisen als Dichtzonenbreite (B) bezeichnet wird, und wobei in mindestens einen der Dichtringe von dessen Stirnfläche (113, 213) her mehrere Vertiefungen (4) eingearbeitet sind, wobei jede Vertiefung einen auf der Stirnfläche in sich geschlossenen Rand (41) hat, der innerhalb der Dichtzone (35) liegt, und wobei zwei Randabschnitte dadurch definiert sind, daß der Rand jeder Vertiefung beidseits von je einer, die Wellenachse schneidenden, in der Ebene der Stirnfläche liegenden radialen Linie (115, 116) fangiert wird, daß also die radialen Linien (115, 116) die Vertiefung einschließen, wobei die beiden auf je einer radialen Linie liegenden Berührpunkte (45 und 46), die unter allen auf derselben radialen Linie liegenden Berührpunkten vom Dichtkreis jeweils den kleinsten Abstand haben, den Rand in zwei Randabschnitte aufteilen und der dem Dichtkreis zugewandte Randabschnitt als Dichtabschnitt (411) und der übrige Rand als Zonenabschnitt (412) bezeichnet wird, wobei von den beiden Berührpunkten (45 und 46) derjenige, der den kleinsten Abstand vom Dichtkreis hat, als Rückförderpunkt **(46)** bezeichnet wird, wobei die radiale Linie die durch den Rückförderpunkt geht als erste radiale Linie **(116)** und die andere als zweite radiale Linie **(115)** bezeichnet wird, daß weiter ein Rückförderkreis **(461)** definiert ist, der durch den Rückförderpunkt **(46)** geht und dessen Mittelpunkt auf der Wellenachse liegt, wobei eine erste Bezugsfläche **(F1)** definiert ist, die eingegrenzt ist vom Rückförderkreis **(461),** vom Dichtabschnitt **(411)** und von der zweiten radialen Linie **(115)** und deren Flächeninhalt negativ gerechnet wird, wo der Dichtabschnitt **(411)** zwischen dem Dichtkreis **(33)** und dem Rückförderkreis **(461)** liegt und positiv gerechnet wird, wo der Rückförderkreis **(461)** zwischen dem Dichtkreis **(33)** und dem Dichtabschnitt **(411)** liegt, und wobei eine zweite Bezugsfläche **(F2)** definiert ist, die eingegrenzt ist vom Rückförderkreis **(461)**, vom Zonenabschnitt **(412)** und von der zweiten radialen Linie **(115)** und deren Flächeninhalt positiv gerechnet wird, **dadurch gekennzeichnet,** daß mindestens einer der Berührpunkte vom Dichtkreis einen geringen Abstand **(A)** hat, der zwischen 0,1 % und 20 % der Dichtzonenbreite **(B)** beträgt, das heißt:

$$0,001 \leq \frac{A}{B} \leq 0,2$$

und daß das Verhältnis der ersten Bezugsfläche **(F1)** zur zweiten Bezugsfläche **(F2)** im Bereich zwischen -0,3 und +0,9 liegt, das heißt:

$$-0,3 \leq \frac{F1}{F2} \leq +0,9$$

2. Gleitringdichtung nach Anspruch 1, dadurch gekennzeichnet, daß der Abstand **(A)** zwischen 1 % und 10% der Dichtzonenbreite **B** beträgt und daß das Verhältnis der ersten Bezugsfläche **(F1)** zur zweiten Bezugsfläche **(F2)** im Bereich zwischen 0 und +0,9 liegt.

3. Gleitringdichtung nach einem der vorangehenden Ansprüche, dadurch gekennzeichnet, daß das Verhältnis der ersten Bezugsfläche **(F1)** zur zweiten Bezugsfläche **(F2)** im Bereich zwischen +0,1 und +0,9 liegt.

4. Gleitringdichtung nach einem der vorangehenden Ansprüche, dadurch gekennzeichnet, daß der Abstand **(A)** höchstens 0,5 mm beträgt.

5. Gleitringdichtung nach einem der vorangehenden Ansprüche, dadurch gekennzeichnet, daß der Abstand **(A)** kleiner als 0,2 mm ist.

6. Gleitringdichtung nach einem der vorangehenden Ansprüche, wobei ein zu den Begrenzungskreisen konzentrischer Mittelkreis **(36)** definiert ist, dessen Radius gleich dem arithmetischen Mittel der Radien der Begrenzungskreise ist, dadurch gekennzeichnet, daß der Rand **(41)** jeder Vertiefung **(4)** zwischen dem Dichtkreis **(33)** und dem Mittelkreis **(36)** liegt.

7. Gleitringdichtung nach einem der vorangehenden Ansprüche, dadurch gekennzeichnet, daß der Rand **(41)** einer Vertiefung in Bezug auf eine Radiale **(118)** spiegelsymmetrisch ist und der Rückförderkreis **(461)** demgemäß durch beide Berührpunkte **(45 und 46)** geht.

8. Gleitringdichtung nach einem der vorangehenden Ansprüche, dadurch gekennzeichnet, daß die größte Tiefe **(t)** einer Vertiefung zwischen 0,2 und 10 Mikrometer beträgt.

9. Gleitringdichtung nach einem der vorangehenden Ansprüche, dadurch gekennzeichnet, daß der Boden einer Vertiefung mindestens teilweise von einer ebenen, zur Stirnfläche **(113, 213)** geneigten Fläche **(431)** gebildet wird.

10. Gleitringdichtung nach einem der vorangehenden Ansprüche, dadurch gekennzeichnet, daß die Tiefe einer Vertiefung in der Nähe mindestens eines der Berührpunkte **(45,46)** kleiner ist als im mittleren Bereich der Vertiefung.

11. Gleitringdichtung nach einem der vorangehenden Ansprüche, dadurch gekennzeichnet, daß die in radialer Richtung gemessene Breite einer Vertiefung in der Nähe mindestens eines der Berührpunkte kleiner ist als im mittleren Bereich der Vertiefung.

12. Gleitringdichtung nach einem der vorangehenden Ansprüche, dadurch gekennzeichnet, daß jede Vertiefung **(42)** aus mindestens zwei Gräben **(421,422,423)** mit unterschiedlichen Längen besteht, wobei der jeweils längere Graben vom Dich kreis **(33)** einen kleineren Abstand hat als jeder kürzere Graben, daß die Gräben entlang von Teilen ihrer Längskanten aneinander angrenzen, dergestalt, daß die von den Gräben und der Stirnflächenebene **(113, 213)** gebildeten Hohlräume ineinander übergehen, und die Gräben im wesentlichen so angeordnet sind, daß ihre Längserstreckung hauptsächlich tangential verläuft.

13. Gleitringdichtung nach Anspruch 12, dadurch gekennzeichnet, daß die aneinander angrenzenden Gräben unterschiedlich tief sind, dergestalt daß der längste Graben **(421)** die geringste Tiefe und der kürzeste Graben **(424)** die größte Tiefe aufweist, wobei die von den Gräben und und der Stirnflächenebene **(113,213)** gebildeten Hohlräume jeweils in den Bereichen, in denen Gräben aneinander angrenzen, mit einer Stufe ineinander übergehen.

14. Gleitringdichtung nach einem der Ansprüche 12 oder 13, dadurch gekennzeichnet, daß in einem Bereich, in dem zwei Gräben aneinander angrenzen, der jeweils weniger tiefe Graben näher beim Dichtkreis **(33)** liegt als jeder tiefere Graben.

15. Gleitringdichtung nach einem der Ansprüche 12 bis 14, dadurch gekennzeichnet, daß die Tiefe (h) des flachsten Grabens **(421)** zwischen 0,2 Mikrometer und 5 Mikrometer beträgt, und die Höhe ($\Delta$**h**) einer Stufe zwischen zwei Gräben zwischen 0,2 Mikrometer und 5 Mikrometer beträgt.

16. Gleitringdichtung nach einem der Ansprüche 12 bis 15, dadurch gekennzeichnet, daß die Breite **(b)** eines Grabens zwischen 0,05 und 0,2 Millimeter beträgt.

17. Gleitringdichtung nach einem der Ansprüche 12 bis 16, dadurch gekennzeichnet, daß die Tiefe mindestens eines Grabens, in seiner Längsrichtung gesehen, zu mindestens einem der Berührpunkte **(45,46)** hin abnimmt.

18. Gleitringdichtung nach einem der Ansprüche 12 bis 17, dadurch gekennzeichnet, daß die Längskanten der Gräben gerade Strecken sind.

19. Gleitringdichtung nach einem der Ansprüche 12 bis 18, dadurch gekennzeichnet, daß mindestens eine Längskante mindestens eines Grabens gekrümmt ist, und der Krümmungsmittelpunkt, vom Graben aus gesehen, jenseits des Dichtkreises **(33)** liegt.

20. Gleitringdichtung nach einem der vorangehenden Ansprüche, dadurch gekennzeichnet, daß der Rand einer Vertiefung aus einem Polygonzug besteht, der gerade und/oder gekrümmte Teilstücke aufweist.

21. Gleitringdichtung nach einem der vorangehenden Ansprüche, dadurch gekennzeichnet, daß der Dichtabschnitt **(411)** eine einzige gerade Strecke **(413)** ist.

22. Gleitringdichtung nach einem der vorangehenden Ansprüche, dadurch gekennzeichnet, daß der Zonenabschnitt **(412)** eine Kurve oder ein Polygonzug aus mindestens zwei Geraden ist.

23. Gleitringdichtung nach einem der vorangehenden Ansprüche, wobei der Dichtkreis **(33)** größer ist als der Zonenkreiskreis **(34)**, dadurch gekennzeichnet, daß der Dichtabschnitt **(411)** kürzer ist als der Zonenabschnitt **(412)**.

24. Gleitringdichtung nach einem der vorangehenden Ansprüche, wobei die Verbindungslinie zwischen dem Schnittpunkt **(117)** der Wellenachse mit der Stirnflächenebene und einem beliebigen Punkt **(40)** des Zonenabschnitts **(412)** als Radiusvektor **(110)** definiert ist, dadurch gekennzeichnet, daß, wenn der Punkt **(40)** sich auf dem Zonenabschnitt **(412)** von einem Berührpunkt **(45)** zum anderen Berührpunkt **(46)** bewegt, der Radiusvektor sich in höchstens einer Richtung dreht.

25. Gleitringdichtung nach Anspruch 1, wobei auch der zweite Raum **(32)** ein Fluid enthält, das vom Dichtraum **(31)** fernzuhalten ist, also auch der zweite Raum ein Dichtraum ist und demgemäß der Zonenkreis **(34)** zugleich ein zweiter Dichtkreis ist, wobei ein zweiter Rückförderkreis **(462)** definiert ist, der den geringen Abstand **(A)** vom zweiten Dichtkreis hat, dadurch gekennzeichnet, daß bei einem Teil der Vertiefungen **(4)** der Rückförderpunkt **(46)** auf dem zweiten Rückförderkreis **(462)** liegt.

26. Gleitringdichtung nach einem der vorangehenden Ansprüche, dadurch gekennzeichnet, daß mindestens in eine der Stirnflächen **(113,213)** zusätzliche Vertiefungen **(51,52)** eingearbeitet sind, die zwischen 1 Mikrometer und 20 Mikrometer tief sind und sich radial mindestens bis zu einem Dichtkreis erstrecken, so daß jede zusätzliche Vertiefung mit einem Dichtraum mindestens zeitweilig in Verbindung steht.

27. Gleitringdichtung nach einem der vorangehenden Ansprüche, dadurch gekennzeichnet, daß die Vertiefungen und die zusätzlichen Vertiefungen mittels Laserstrahl oder Elektronenstrahl in den Dichtring eingearbeitet sind.

28. Gleitringdichtung nach einem der vorangehenden Ansprüche, dadurch gekennzeichnet, daß die Vertiefungen mittels des Laserstrahls eines Excimer-Lasers eingearbeitet sind.

29. Gleitringdichtung nach einem der Ansprüche 27 oder 28, dadurch gekennzeichnet, daß mindestens ein Teil der Vertiefungen durch mehrmalige zeitlich aufeinanderfolgende Bestrahlung der Projektionsfläche oder von Teilen der Projektionsfläche der Vertiefungen eingearbeitet werden.

30. Gleitringdichtung nach einem der Ansprüche 27 bis 29, dadurch gekennzeichnet, daß aneinander angrenzende Bereiche einer Vertiefung überlappend bestrahlt sind, wodurch die überlappend bestrahlten Teilbereiche tiefer sind als die daran anschließenden Bereiche.

31. Gleitringdichtung nach einem der Ansprüche 27 bis 30 dadurch gekennzeichnet, daß mehrere Vertiefungen durch gleichzeitige Bestrahlung mehrerer Stellen des Dichtrings gleichzeitig hergestellt sind.

32. Gleitringdichtung nach einem der vorangehenden Ansprüche, dadurch gekennzeichnet, daß der Ring, in den Vertiefungen eingearbeitet sind, aus keramischem Werkstoff besteht.

33. Gleitringdichtung nach Anspruch 32, dadurch gekennzeichnet, daß die Vertiefungen in die bereits plangeläppte Dichtfläche des gesinterten, harten Keramikrings eingearbeitet werden.

34. Gleitringdichtung nach einem der Ansprüche 32 oder 33, dadurch gekennzeichnet, daß der keramische Werkstoff Siliciumkarbid ist.

## Claims

1. Floating ring seal for sealing off the passage of a rotating shaft (1) through a wall (2) which separates a sealing chamber (31) containing a fluid from a second chamber (32), a higher pressure generally prevailing in the sealing chamber than in the second chamber, and the floating ring seal having a first sealing ring (21), rotationally fixed to the wall and sealed off from the latter, with a plane first face (213), bounded by an outer edge (211) and an inner edge (212) and lying radially to the shaft axis (114), the floating ring seal further having a second sealing ring (11), rotationally fixed to the shaft and sealed off from the latter, with a plane second face (113), bounded by an outer edge (111) and an inner edge (112) and lying radially to the shaft axis, one of the sealing rings being moveable in the direction of the shaft axis and pressable against the other sealing ring and the two faces touching one another when the shaft is stationary and forming a narrow sealing gap (13) when the shaft is rotating, that area of the sealing gap which is covered by both faces at any time when the shaft is rotating being designated as sealing zone (35), the sealing zone being enclosed by two boundary circles, the centre of each of which lies on the shaft axis and the radius of one boundary circle being equal to the distance between the shaft axis and that point of one of the outer edges (111, 211) lying closest to the said axis and the radius of the other boundary circle being equal to the distance between the shaft axis and that point of one of the inner edges (112, 212) lying furthest from the said axis, and that boundary circle which lies closer to the sealing chamber (31) being designated as sealing circle (33), and that boundary circle which lies closer to the second chamber (32) being designated as zone circle (34), the distance between the boundary circles being designated as sealing zone width (B), and a plurality of recesses (4) being machined into at least one of the sealing rings from its face (113, 213), each recess having an edge (41) enclosed on the face, which edge lies inside the sealing zone (35), and two edge sections being defined in that the edge of each recess is touched on either side respectively by a radial line (115,116) lying in the plane of the face and intersecting the shaft axis, that the radial lines (115,116) therefore enclose the recess, the two contact points (45 and 46), which each lie on a radial line and of all contact points lying on one and the same radial line are each respectively situated at the shortest distance from the sealing circle, dividing the edge into two edge sections and the edge section facing the sealing circle being designated as sealing section (411) and the other edge as zone section (412), that contact point of the two contact points (45 and 46) situated at the shortest distance from the sealing circle being designated as return point (46), the radial line which passes through the return point being designated as first radial line (116) and the other as second radial line (115), that a return circle (461) is also defined which passes through the return point (46) and the centre of which lies on the shaft axis, a first reference surface (F1) being defined, which is bounded by the return circle (461), by the sealing section (411) and by the second radial line (115) and its area calculated negatively where the sealing section (411) lies between the sealing circle (33) and the return circle (461) and positively where the return circle (461) lies between the sealing circle (33) and sealing section (411), and a second reference surface (F2) being defined which is bounded by the return circle (461), by the zone section (412) and by the second radial line (115) and its area calculated positively, **characterised in that** at least one of the contact points is situated at a short distance (A) from the sealing circle which amounts to between 0.1% and 20% of the sealing zone width (B), that is:

$$0.001 \leq \frac{A}{B} \leq 0.2$$

and that the ratio of the first reference surface (F1) to the second reference surface (F2) lies in the range between -0.3 and +0.9, that is:

$$-0.3 \leq \frac{F1}{F2} \leq +0.9$$

2. Floating ring seal according to claim 1, characterised in that the distance (A) is between 1% and 10% of the sealing zone width B and that the ratio of the first reference surface (F1) to the second reference surface (F2) lies in the range between 0 and +0.9.

3. Floating ring seal according to one of the preceding claims, characterised in that the ratio of the first reference surface (F1) to the second reference surface (F2) lies in the range between +0.1 and +0.9.

4. Floating ring seal according to one of the preceding claims, characterised in that the distance (A) is at most 0.5 mm.

5. Floating ring seal according to one of the preceding claims, characterised in that the distance (A) is smaller than 0.2 mm.

6. Floating ring seal according to one of the preceding claims, a centre circle (36) concentric with the boundary circles being defined, the radius of which is equal to the arithmetic mean of the radii of the boundary circles, characterised in that the edge (41) of each recess (4) lies between the sealing circle (33) and the centre circle (36).

7. Floating ring seal according to one of the preceding claims, characterised in that the edge (41) of a recess is mirror symmetrical in relation to a radial (118) and the return circle (461) accordingly passes through both contact points (45 and 46).

8. Floating ring seal according to one of the preceding claims, characterised in that the greatest depth (t) of a recess is between 0.2 and 10 micron.

9. Floating ring seal according to one of the preceding claims, characterised in that the base of a recess is formed at least partially by a plane surface (431) inclined towards the face (113, 213).

10. Floating ring seal according to one of the preceding claims, characterised in that the depth of a recess in proximity to at least one of the contact points (45,46) is less than in the middle area of the recess.

11. Floating ring seal according to one of the preceding claims, characterised in that the width of a recess measured in a radial direction is less in proximity to at least one of the contact points than in the middle area of the recess.

12. Floating ring seal according to one of the preceding claims, characterised in that each recess (42) comprises at least two depressions (421,422,423) of differing lengths, the longer depression in each case being situated at a shorter distance from the sealing circle (33) than each shorter depression, that the depressions adjoin one another along parts of their longitudinal edges in such a way that the hollow spaces formed by the depressions and the face plane (113,213) merge into one another, and the depressions are essentially arranged so that in their longitudinal extent they run mainly tangentially.

13. Floating ring seal according to claim 12, characterised in that the depressions adjoining one another are of different depth, such that the longest depression (421) has the smallest depth and the shortest depression (424) the greatest depth, the hollow spaces formed by the depressions and the face plane (113, 213) each merging into one another with a step in the areas in which depressions adjoin one another.

14. Floating ring seal according to one of claims 12 or 13, characterised in that in an area in which two depressions adjoin one another the shallower depression in each case lies closer to the sealing circle (33) than the deeper depression.

15. Floating ring seal according to one of claims 12 to 14, characterised in that the depth (h) of the shallowest depression (421) is between 0.2 micron and 5 micron, and the height ($\Delta$h) of a step between two depressions is between 0.2 micron and 5 micron.

16. Floating ring seal according to one of claims 12 to 15, characterised in that the width (b) of a depression is between 0.05 and 0.2 millimetres.

17. Floating ring seal according to one of claims 12 to 16, characterised in that the depth of at least one depression, viewed in its longitudinal direction, decreases towards at least one of the contact points (45,46).

18. Floating ring seal according to one of claims 12 to 17, characterised in that the longitudinal edges of the depressions are straight line segments.

19. Floating ring seal according to one of claims 12 to 18, characterised in that at least one longitudinal edge of at least one depression is curved and the centre of curvature, viewed from the depression, lies on the other side of the sealing circle (33).

20. Floating ring seal according to one of the preceding claims, characterised in that the edge of a recess comprises a polygonal feature which has straight and/or curved sections.

21. Floating ring seal according to one of the preceding claims, characterised in that the sealing section (411) is a single straight line segment (413).

22. Floating ring seal according to one of the preceding claims, characterised in that the zone section (412) is a curve or a polygonal feature composed of at least two straight lines.

23. Floating ring seal according to one of the preceding claims, the sealing circle (33) being larger than the zone circle (34), characterised in that the sealing section (411) is shorter than the zone section (412).

24. Floating ring seal according to one of the preceding claims, the connecting line between the intersection (117) of the shaft axis with the face plane and any point (40) of the zone section (412) being defined as radius vector (110), characterised in that when the point (40) moves on the zone section (412) from one contact point (45) to the other contact point (46), the radius vector rotates in no more than one direction.

25. Floating ring seal according to claim 1, the second chamber (32) also containing a fluid which is to be kept away from the sealing chamber (31), that is to say the second chamber is also a sealing chamber and consequently the zone circle (34) is simultaneously a second sealing circle, a second return circle (462) being defined which is situated at the shorter distance (A) from the second sealing circle, characterised in that in some of the recesses (4) the return point (46) lies on the second return circle (462)

26. Floating ring seal according to one of the preceding claims, characterised in that additional recesses (51, 52) are machined into at least one of the faces (113, 213), which recesses are between 1 micron and 20 micron deep and extend radially at least to a sealing circle, so that each additional recess connects with a sealing chamber at least temporarily.

27. Floating ring seal according to one of the preceding claims, characterised in that the recesses and the additional recesses are machined into the sealing ring using a laser beam or electron beam.

28. Floating ring seal according to one of the preceding claims, characterised in that the recesses are machined using the laser beam of an excimer laser.

29. Floating ring seal according to one of claims 27 or 28, characterised in that at least some of the recesses are machined by repeated successive irradiation of the projection area or of parts of the projection area of the recesses.

30. Floating ring seal according to one of claims 27 to 29, characterised in that areas of a recess adjoining one another are irradiated with an overlap, the areas irradiated with an overlap being deeper than the adjoining areas.

31. Floating ring seal according to one of claims 27 to 30, characterised in that a plurality of recesses are produced simultaneously by simultaneous irradiation of a plurality of points of the sealing ring.

32. Floating ring seal according to one of the preceding claims, characterised in that the ring into which the recesses are machined is composed of ceramic material.

33. Floating ring seal according to claim 32, characterised in that the recesses are machined into the already surface-lapped sealing surface of the sintered, hard ceramic ring.

34. Floating ring seal according to one of claims 32 or 33, characterised in that the ceramic material is silicon carbide.

**Revendications**

1. Garniture étanche à anneau glissant pour sceller un point de passage d'un arbre rotatif (1) à travers une paroi (2), séparant un espace étanche contenant un fluide (31) d'un deuxième espace (32), la pression étant en général plus élevée dans l'espace étanche que dans le deuxième espace, la garniture étanche à anneau glissant comportant un premier anneau d'étanchéité (21) retenu contre la paroi de façon résistante à la rotation et scellé par rapport à celle-ci, avec une première surface frontale plane (213), agencée radialement par rapport à l'axe de l'arbre (114), limitée par un bord extérieur (211) et un bord intérieur (212), la garniture étanche à anneau glissant comportant en outre un deuxième anneau d'étanchéité retenu contre l'arbre de façon résistante à la rotation et scellé par rapport à celui-ci, avec une deuxième surface frontale (113) plane, agencée radialement par rapport à l'axe de l'arbre et limitée par un bord extérieur (111) et un bord intérieur (112), l'un des anneaux d'étanchéité pouvant être déplacé dans la direction de l'axe de l'arbre et pouvant être pressé contre l'autre anneau d'étanchéité, les deux surfaces frontales se contactant lors de l'arrêt de l'arbre et formant une fente d'étanchéité étroite (13) lors de la rotation de l'arbre, la zone de la fente d'étanchéité recouverte à tout moment par les deux surfaces frontales lors de la rotation de l'arbre étant désignée de zone d'étanchéité (35), la zone d'étanchéité étant renfermée par deux cercles de délimitation, dont le centre se situe sur l'axe de l'arbre, le rayon de l'un des cercles de délimitation correspondant à la distance entre l'axe de l'arbre et le point le plus proche de l'un des bords extérieurs (111, 112), le rayon de l'autre des cercles de délimitation correspondant à la distance entre l'axe de l'arbre et le point le plus éloigné de l'un des bords intérieurs (112, 212), le cercle de délimitation le plus proche de l'espace d'étanchéité (31), étant désigné de cercle d'étanchéité (33), le cercle de délimitation le plus proche du deuxième espace (32) étant désigné de cercle de zone (34), la distance entre les cercles de délimitation étant désignée de largeur de la zone d'étanchéité (B), au moins un des anneaux d'étanchéité comportant plusieurs dépressions (4), façonnées à partir de sa surface frontale (113, 213), chaque dépression comportant un bord (41) fermé sur la surface frontale, agencé à l'intérieur de la zone d'étanchéité (35), deux sections de bordure étant définies par le fait que le bord de chaque dépression est contacté des deux côtés par une ligne radiale (115, 116) coupant l'axe de l'arbre et agencée dans le plan de la surface frontale, les lignes radiales (115, 116) renfermant ainsi la dépression, les deux points de contact (45 et 46), situés chacun sur une ligne radiale étant espacés du cercle d'étanchéité de la distance la plus réduite de tous les points de contact agencés sur la même ligne radiale, divisant le bord en deux sections de bordure, la section de bordure orientée vers le cercle d'étanchéité (411) étant désignée de section d'étanchéité, l'autre section de bordure étant désignée de section de zone (412), le point de contact des deux points de contact (45 et 46) espacé du cercle d'étanchéité de la distance la plus réduite étant désigné de point de refoulement (46), la ligne radiale traversant le point de refoulement étant désignée de première ligne radiale (11), la deuxième étant désignée de deuxième ligne radiale (115), un cercle de refoulement (461) étant en outre défini, qui traverse le point de refoulement (46) et dont le centre se situe sur l'axe de l'arbre, une première surface de référence (F1) étant ainsi définie, délimitée par le cercle de refoulement (461), par la section d'étanchéité (411) et par la deuxième ligne radiale (115) et dont l'aire de surface est calculée négativement lorsque la section d'étanchéité (411) se situe entre le cercle d'étanchéité (33) et le cercle de refoulement (461), et est calculée positivement lorsque le cercle de refoulement (461) se situe entre le cercle d'étanchéité (33) et la section d'étanchéité (411), une deuxième surface de référence (F2) étant en outre définie, délimitée par le cercle de refoulement (461), la section de zone (412) et la deuxième ligne radiale (115), son aire de surface étant calculée positivement, caractérisée en ce qu'au moins un des points de contact est espacé d'une faible distance (A) du cercle d'étanchéité, représentant de 0,1% à 20% de la largeur de la zone d'étanchéité (B), c.à.d. que

$$0,001 \leq \frac{A}{B} \leq 0,2$$

et en ce que le rapport entre la première surface de référence (F1) et la deuxième surface de référence (F2) est compris dans l'intervalle allant de -0,3 à +0,9, c.à.d. que

$$-0,3 \leq \frac{F1}{F2} \leq +0,9$$

2. Garniture étanche à anneau glissant selon la revendication 1, caractérisée en ce que la distance (A) représente de 1% à 10% de la largeur de la zone d'étanchéité B et que le rapport entre la première surface de référence (F1) et la deuxième surface de référence (F2) est comprise dans l'intervalle allant de 0 à +0,9.

3. Garniture étanche à anneau glissant selon l'une des revendications précédentes, caractérisée en ce que le rapport entre la première surface de référence (F1) et la deuxième surface de référence (F2) est compris dans l'intervalle allant de 0,1 à +0,9.

4. Garniture étanche à anneau glissant selon l'une des revendications précédentes, caractérisée en ce que la distance (A) correspond au maximum à 0,5 mm.

5. Garniture étanche à anneau glissant selon l'une des revendications précédentes, caractérisée en ce que la distance (A) est inférieure à 0,2 mm.

6. Garniture étanche à anneau glissant selon l'une des revendications précédentes, dans laquelle est défini un cercle central (36) concentrique par rapport aux cercles de délimitation, dont le rayon correspond à la moyenne arithmétique des rayons des cercles de délimitation, caractérisée en ce que le bord (41) de chaque dépression (4) est situe entre le cercle d'étanchéité (33) et le cercle central (36).

7. Garniture étanche à anneau glissant selon l'une des revendications précédentes, caractérisée en ce que le bord (41) d'une dépression est symétrique à une radiale (118), le cercle de refoulement (461) traversant ainsi les deux points de contact (45 et 46).

8. Garniture étanche à anneau glissant selon l'une des revendications précédentes, caractérisée en ce que la profondeur maximale (t) d'une dépression est comprise entre 0,2 et 10 micromètres.

9. Garniture étanche à anneau glissant selon l'une des revendications précédentes, caractérisée en ce que le fond d'une dépression est formé au moins partiellement par une surface plane (431), inclinée par rapport à la surface frontale (113, 213).

10. Garniture étanche à anneau glissant selon l'une des revendications précédentes, caractérisée en ce que la profondeur d'une dépression est plus réduite à proximité de l'un des points de contact (45, 46) que dans la région centrale de la dépression.

11. Garniture étanche à anneau glissant selon l'une des revendications précédentes, caractérisée en ce que la largeur d'une dépression, mesurée dans le sens radial, est plus réduite à proximité d'au moins un des points de contact que dans la région centrale de la dépression.

12. Garniture étanche à anneau glissant selon l'une des revendications précédentes, caractérisée en ce que chaque dépression (42) est composée d'au moins deux fossés (421, 422, 423) de longueurs différentes, le fossé plus long étant à chaque fois espacé du cercle d'étanchéité (33) d'une distance plus réduite que chaque fossé plus court, en ce que les fossés sont adjacents le long de parties de leurs arêtes longitudinales, de sorte que les espaces creux formés par les fossés et le plan de la surface frontale (113, 213) sont réunis, les fossés étant pour l'essentiel agencés de sorte que leur extension longitudinale est essentiellement tangentielle.

13. Garniture étanche à anneau glissant selon la revendication 12, caractérisée en ce que les fossés adjacents ont une profondeur différente, le fossé le plus long (421) ayant la profondeur minimale et le fossé le plus court (424) ayant la profondeur maximale, les espaces creux formés par les fossés et le plan de la surface frontales (113, 213) étant ainsi réunis par un gradin dans les régions où les fossés sont adjacents.

14. Garniture étanche à anneau glissant selon l'une des revendications 12 ou 13, caractérisée en ce que dans une région où deux fossés sont adjacents, le fossé le moins profond est à chaque fois plus près du cercle d'étanchéité (33) que chaque fossé plus profond.

15. Garniture étanche à anneau glissant selon l'une des revendications 12 à 14, caractérisée en ce que la profondeur (h) du fossé le plus plat (421) est comprise entre 0,2 micromètre et 5 micromètres, la hauteur (Δh) d'un gradin entre deux fossés étant comprise entre 0,2 micromètre et 5 micromètres.

16. Garniture étanche à anneau glissant selon l'une des revendications 12 à 15, caractérisée en ce que la largeur (b) d'un fossé est comprise entre 0,05 et 0,2 millimètre.

17. Garniture étanche à anneau glissant selon l'une des revendications 12 à 16, caractérisée en ce que la profondeur d'au moins un fossé, vue dans le sens de sa longueur, se réduit au moins en direction de l'un des points de contact (45, 46).

18. Garniture étanche à anneau glissant selon l'une des revendications 12 à 17, caractérisée en ce que les arêtes longitudinales des fossés sont des étendues droites.

19. Garniture étanche à anneau glissant selon l'une des revendications 12 à 18, caractérisée en ce qu'au moins une arête longitudinale d'au moins un fossé est courbée, le centre de la courbure, vu du fossé, se situant au-delà du cercle d'étanchéité (33).

20. Garniture étanche à anneau glissant selon l'une des revendications précédentes, caractérisée en ce que le bord d'une dépression se compose d'un tracé polygonal, présentant des tronçons droits et/ou courbés.

21. Garniture étanche à anneau glissant selon l'une des revendications précédentes, caractérisée en ce que la section d'étanchéité (411) est une seule étendue droite (413).

22. Garniture étanche à anneau glissant selon l'une des revendications précédentes, caractérisée en ce que la section de zone (412) est une courbe ou un tracé polygonal composé d'au moins deux droites.

23. Garniture étanche à anneau glissant selon l'une des revendications précédentes, dans laquelle le cercle d'étanchéité (33) est plus grand que le cercle de zone (34), caractérisée en ce que la section d'étanchéité (411) est plus courte que la section de zone (412).

24. Garniture étanche à anneau glissant selon l'une des revendications précédentes, dans laquelle la ligne de jonction entre le point d'intersection (117) de l'axe de l'arbre et du plan des surfaces frontales et un point quelconque (40) de la section de zone (412) est défini comme le rayon vecteur (110), caractérisée en ce que lors du déplacement du point (40) sur la section de zone (412) d'un point de contact (45) vers l'autre point de contact (46), le rayon vecteur tourne au maximum dans une direction.

25. Garniture étanche à anneau glissant selon la revendication 1, dans laquelle le deuxième espace (32) contient également un fluide, devant être tenu à l'écart de l'espace d'étanchéité (31), le deuxième espace étant donc aussi un espace d'étanchéité et le cercle de zone (34) étant aussi un deuxième cercle d'étanchéité, un deuxième cercle de refoulement (462) étant ainsi défini, espacé du deuxième cercle d'étanchéité de la distance réduite (A), caractérisée en ce que dans une partie des dépressions (4), le point de refoulement (46) se situe sur le deuxième cercle de refoulement (462).

26. Garniture étanche à anneau glissant selon l'une des revendications précédentes, caractérisée en ce qu'au moins une des surfaces frontales (113, 213) comporte des dépressions supplémentaires (51, 52), ayant une profondeur comprise entre 1 micromètre et 20 micromètres et s'étendant radialement au moins jusqu'à un cercle d'étanchéité, de sorte que chaque dépression supplémentaire est au moins temporairement en communication avec un espace d'étanchéité.

**27.** Garniture étanche à anneau glissant selon l'une des revendications précédentes, caractérisée en ce que les dépressions et les dépressions supplémentaires sont façonnées au moyen d'un faisceau laser ou d'un faisceau électronique dans l'anneau d'étanchéité.

**28.** Garniture étanche à anneau glissant selon l'une des revendications précédentes, caractérisée en ce que les dépressions sont façonnées au moyen d'un faisceau laser d'un laser excimer.

**29.** Garniture étanche à anneau glissant selon l'une des revendications 27 ou 28, caractérisée en ce qu'au moins une partie des dépressions sont façonnées par une irradiation répétée et successive dans le temps de la surface de projection ou de parties de la surface de projection des dépressions.

**30.** Garniture étanche à anneau glissant selon l'une des revendications 27 à 29, caractérisée en ce que les régions adjacentes d'une dépression sont irradiées à chevauchement, les régions partielles irradiées à chevauchement étant plus profondes que les zones raccordées.

**31.** Garniture étanche à anneau glissant selon l'une des revendications 27 à 30, caractérisée en ce que plusieurs dépressions sont produites simultanément par irradiation simultanée de plusieurs endroits de l'anneau d'étanchéité.

**32.** Garniture étanche à anneau glissant selon l'une des revendications précédentes, caractérisée en ce que l'anneau dans lequel sont façonnées les dépressions est composé d'un matériau céramique.

**33.** Garniture étanche à anneau glissant selon la revendication 32, caractérisée en ce que les dépressions sont façonnées dans la surface d'étanchéité plane déjà rodée de l'anneau en céramique dure frittée.

**34.** Garniture étanche à anneau glissant selon l'une des revendications 32 ou 33, caractérisée en ce que le matériau céramique est du carbure de silicium.

FIG 1    FIG 1a

EP 0 592 462 B1

FIG 1b

FIG 1c

FIG 1d

FIG. 2

FIG 3

FIG. 4

FIG. 5

FIG. 6

FIG. 7

FIG. 8

FIG. 9

EP 0 592 462 B1